# EUROPÄISCHE PATENTSCHRIFT

(11) **EP 2 591 323 B1**
(45) Veröffentlichungstag und Bekanntmachung des Hinweises auf die Patenterteilung: **19.12.2018**
(21) Anmeldenummer: 11718736.9
(22) Anmeldetag: 10.05.2011
(51) Int. Cl.: G01J 5/08

(54) **KONTAKTFREIES MESSEN EINER MITTLEREN OBERFLÄCHENTEMPERATUR EINES MESSBEREICHS**
NON-CONTACT MEASURING A MEAN SURFACE TEMPERATURE OF A MEASURING AREA
MESURE SANS CONTACT D'UNE TEMPERATURE MOYENNE DE SURFACE DANS UNE ZONE DE MESURE

(30) Priorität: 05.07.2010 DE 102010030928
(43) Veröffentlichungstag der Anmeldung: 15.05.2013
(73) Patentinhaber: Robert Bosch GmbH, 70442 Stuttgart (DE)
(72) Erfinder: ZIMMERMANN, Thomas, 80639 München (DE)
(86) Internationale Anmeldenummer: PCT/EP2011/057469
(87) Internationale Veröffentlichungsnummer: WO 2012/004024

(56) Entgegenhaltungen:
- EP-A1- 1 326 063
- DE-A1- 10 335 319
- DE-B3-102007 039 787
- US-A- 5 219 226
- US-A1- 2006 152 737
- US-A1- 2009 302 219

## Beschreibung

Die Erfindung bezieht sich auf eine Vorrichtung und ein Verfahren zum kontaktfreien Messen einer mittleren Oberflächentemperatur eines Messbereichs.

### Stand der Technik

Vorrichtungen und Verfahren zum kontaktfreien Messen einer mittleren Oberflächentemperatur eines Messbereichs sind im Stand der Technik bekannt und dienen unter anderem dazu, fehlerhafte elektrische Verbindungen, Fehler in maschinellen Abläufen oder mangelhafte Stellen einer Wärmeisolation aufzudecken. Beispielsweise weisen fehlerhafte elektrische Verbindungen einen hohen elektrischen Widerstand auf und erhitzen sich, wenn Strom durch sie fließt. Deswegen sind fehlerhafte elektrische Verbindungen als Wärmequellen erkennbar, das heißt als Stellen, die ein lokales Temperaturmaximum aufweisen. Mangelhafte Stellen einer Wärmeisolation sind als Wärmesenken, das heißt als Stellen, die ein lokales Temperaturminimum aufweisen, oder als Wärmequellen erkennbar. In der Industrie und der Forschung, aber auch im alltäglichen Gebrauch werden zum Entdecken und zum Lokalisieren von Wärmequellen und Wärmesenken häufig Infrarotthermometer verwendet, da diese eine Reihe von Vorteilen gegenüber konventionellen Temperaturmessgeräten aufweisen. Infrarotthermometer arbeiten kontaktfrei und schnell und werden insbesondere dann eingesetzt, wenn Geräte schwer zugänglich, gefährlich und/oder Bauteile schwer austauschbar sind.

Die Temperaturmessung mit Hilfe eines Infrarotthermometers basiert auf dem Nachweis der Wärmestrahlung, die von jedem Gegenstand im infraroten Bereich des Strahlungsspektrums emittiert wird. Die Intensität der Wärmestrahlung eines Gegenstands ist abhängig von der Oberflächentemperatur des Gegenstands. Ist die Intensität der Wärmestrahlung eines Körpers bekannt, kann daraus eine mittlere Oberflächentemperatur des Körpers bestimmt werden. Üblicherweise wird die Oberflächentemperatur über die Intensität der Wärmestrahlung in dem ganzen oder in einem schmalen Wellenlängenbereich aus dem mittleren Infrarot bestimmt, wobei das mittlere Infrarot als Strahlung mit einer Wellenlänge zwischen 3 µm und 50 µm definiert ist.

Gängige Ausführungsformen lassen sich in Vorrichtungen erster Art und Vorrichtungen zweiter Art einteilen.

Vorrichtungen erster Art weisen typischerweise einen Infrarotsensor, eine Linse, eine Anzeige und eine Laserquelle auf. Die Kombination und die Anordnung des Infrarotsensors mit der Linse gibt ein Messvolumen vor, aus dem Wärmestrahlung nachgewiesen wird. Ist die Vorrichtungen erster Art auf eine Oberfläche eines Gegenstands ausgerichtet, bildet der Schnitt des Messvolumens mit der Oberfläche des Gegenstands einen Messbereich. Ein Teil der Wärmestrahlung, die von dem Messbereich ausgeht, wird von der Vorrichtungen erster Art nachgewiesen. Die Vorrichtung erster Art bestimmt aus der Intensität der Wärmestrahlung eine mittlere Oberflächentemperatur des Messbereichs und gibt diese mittlere Oberflächentemperatur auf der Anzeige aus. Um die kontaktlose Temperaturmessung mit dem Ort der vorgenommenen Messung korrelieren zu können, ist die Laserquelle der Vorrichtung erster Art auf den Messbereich so ausgerichtet, dass beispielsweise der Mittelpunkt des Messbereichs durch den Laserstrahl markiert wird. Wärmequellen und Wärmesenken lassen sich über ein Abfahren der Oberfläche lokalisieren. Die US 6,659,639 A1 und die US 2009/0304042 A1 beschreiben Vorrichtungen und Verfahren erster Art.

Vorrichtungen zweiter Art weisen typischerweise einen ersten Bildsensor, der Strahlung im infraroten Spektrum erfasst, ein erstes Linsensystem, einen zweiten Bildsensor, der Strahlung im sichtbaren Spektrum erfasst, ein zweites Linsensystem und einen Bildschirm auf. Vorrichtungen zweiter Art bilden den zu untersuchenden Gegenstand sowohl im infraroten als auch im sichtbaren Bereich des Strahlungsspektrums auf dem Bildschirm ab. Hierfür wird die aus dem infraroten Bild gewonnene Temperaturinformation farbkodiert und über das sichtbare Bild transparent überlagert. Um eine Wärmequelle oder Wärmesenke zu lokalisieren, genügt ein schneller Blick auf den Bildschirm: anhand der Farbkodierung der Temperaturdaten lassen sich warme und kalte Oberflächen augenblicklich erkennen. Die US 2009/0302219 A1 und die US 7,652,251 A1 beschreiben Vorrichtungen und Verfahren zweiter Art.

Während bei der Verwendung einer Vorrichtungen erster Art ein Gegenstand mühsam abgefahren werden muss, um eine Wärmequelle oder Wärmesenke zu lokalisieren, genügt bei der Verwendung einer Vorrichtungen zweiter Art ein schneller Blick auf einen Bildschirm: anhand der Farbkodierung der Temperaturdaten lassen sich warme und kalte Oberflächen augenblicklich erkennen. Jedoch sind Vorrichtungen zweiter Art aufgrund der dafür notwendigen bildgebenden Infrarotsensoren sehr kostspielig. Kostengünstige Geräte, mit denen Wärmequellen und Wärmesenken systematisch aufgespürt werden können, sind aus dem Stand der Technik nicht bekannt.

### Aufgabe der Erfindung

Es ist Aufgabe der vorliegenden Erfindung, eine Vorrichtung und ein Verfahren zum kontaktfreien Messen einer mittleren Oberflächentemperatur eines ersten Messbereichs bereitzustellen, die möglichst kostengünstig sind, das heißt auf nur einen der kostspieligen Infrarotsensoren angewiesen ist, und dennoch eine systematische Lokalisierung von Wärmequellen und Wärmesenken ermöglichen. Insbesondere soll es dem Benutzer der erfindungsgemäßen Vorrichtung oder dem erfindungsgemäßen Verfahren möglich sein, die Größe des ersten Messbereichs einzustellen.

### Offenbarung der Erfindung

Diese Aufgabe wird durch eine Vorrichtung zum kontaktfreien Messen einer mittleren Oberflächentemperatur eines ersten Messbereichs mit den Merkmalen des unabhängigen Anspruchs gelöst. Weitere Ausführungsformen der Erfindung sind in den auf diese rückbezogenen Unteransprüche angegeben.

Unter dem Messbereich im Sinne der vorliegenden Erfindung wird die Menge der Teilchen verstanden, deren Wärmestrahlung die erfindungsgemäße Vorrichtung erfasst. Typischerweise ergibt sich der Messbereich im Wesentlichen aus der Schnittmenge zwischen einem Messvolumen, das Volumen aus dem die erfindungsgemäße Vorrichtung Wärmestrahlung erfasst, und einer Oberfläche eines zu untersuchenden Gegenstands. Die Temperatur des ersten Messbereichs weist normalerweise lokale Schwankungen auf. Deswegen wird erfindungsgemäß eine mittlere Oberflächentemperatur des ersten Messbereichs bestimmt.

Eine Vorrichtung zum kontaktfreien Messen einer mittleren Oberflächentemperatur eines ersten Messbereichs gemäß der vorliegenden Erfindung weist einen ersten Infrarotsensor, einen Bildsensor, einen Prozessor, einen Bildschirm und Linsenmittel auf.

Der erste Infrarotsensor kann eine erste Wärmestrahlung des ersten Messbereichs erfassen und basierend auf der ersten Wärmestrahlung ein erstes Signal erzeugen. Als erster Infrarotsensor kommen Vorrichtungen in Frage, die Strahlung aus dem mittleren Infrarotbereich erfassen und in ein Signal, insbesondere ein elektrisches Signal, umwandeln können. Strahlung aus dem mittleren Infrarotbereich liegt im Wellenlängebereich zwischen 3 µm und 50 µm. Beispiele für einen erfindungsgemäßen ersten Infrarotsensor sind Fotodioden, Bolometer oder pyroelektrische Sensoren.

Der Bildsensor kann eine sichtbare Strahlung eines Bildbereichs erfassen und basierend auf der sichtbaren Strahlung ein Kamerabild erzeugen. Dabei umfasst der Bildbereich den ersten Messbereich zumindest teilweise. Als Bildsensor kommen Vorrichtungen in Frage, die sichtbare Strahlung, das heißt Strahlung aus dem Wellenlängenbereich zwischen 380 nm und 780 nm, erfassen und daraus ein Kamerabild erstellen. Das Kamerabild kann insbesondere als ein elektronisches Bildsignal ausgestaltet sein. Beispiele für einen erfindungsgemäßen Bildsensor sind unter anderem CCD-Bildsensoren oder CMOS-Bildsensoren. Unter einem Bildbereich im Sinne der vorliegenden Anmeldung wird die Menge der Teilchen verstanden, von denen sichtbare Strahlung ausgeht, die der Bildsensor erfasst.

Der Prozessor kann die mittlere Oberflächentemperatur des ersten Messbereichs basierend auf dem ersten Signal bestimmen. Weiterhin kann der Prozessor ein bearbeitetes Bild erstellen. Das bearbeitete Bild stellt zumindest einen Teil des Kamerabilds dar, wobei das bearbeitete Bild einen Ort des ersten Messbereichs in dem bearbeiteten Bild und die mittlere Oberflächentemperatur des ersten Messbereichs anzeigt. Beispiele für einen erfindungsgemäßen Prozessor sind unter anderem Mikroprozessoren, Mikrocontroller oder Mehrkernprozessoren.

Der Bildschirm kann das bearbeitete Bild darstellen. Beispiele für einen erfindungsgemäßen Bildschirm sind unter anderem Flüssigkristallbildschirme, Dünnschichttransistorbildschirme, Surface-Conduction Electron-Emitter Bildschirme, Plasmabildschirme, Leuchtdiodenbildschirme oder Feldemissionsbildschirme. Besonders vorteilhaft kann die Verwendung eines Touchscreens als erfindungsgemäßen Bildschirm sein, auf dem zusätzlich zu dem bearbeiteten Bild Bedienelemente dargestellt werden können. Der Touchscreen weist Berührungen der dargestellten Bedienelemente nach und leitet diese an den Prozessor weiter. Des Weiteren kann der Bildschirm abnehmbar sein, so dass die Vorrichtung aus einer Messeinheit und einer Ableseeinheit, das heißt dem Bildschirm, der vorzugsweise ein Touchscreen ist, besteht. Messeinheit und Ableseeinheit sind drahtlos über beispielsweise Bluetooth oder WLAN verbunden.

Die Linsenmittel können die Größe des ersten Messbereichs ändern. Beispiele für erfindungsgemäße Linsenmittel sind in den Ansprüchen beschrieben.

Mit der erfindungsgemäßen Vorrichtung ist der Vorteil verbunden, dass sich Wärmequellen und Wärmesenken mit nur einem Infrarotsensor systematisch lokalisieren lassen. Dieser Vorteil ergibt sich aus der vorteilhaften Kombination des Infrarotsensors, des Bildsensors, des Prozessors und des Bildschirms mit den Linsenmitteln. Zum einen lässt sich anhand der Linsenmittel die Ortsauflösung, das heißt die Größe des ersten Messbereichs, der erfindungsgemäßen Vorrichtung ändern. Zum anderen lässt sich auf dem Bildschirm der Ort des ersten Messbereichs, für den die mittlere Oberflächentemperatur bestimmt wird, in dem durch den Bildsensor aufgenommenen Kamerabild ausfindig machen. Um mit Hilfe der erfindungsgemäßen Vorrichtung beispielsweise eine Wärmequelle systematisch zu lokalisieren, wird der erste Messbereich der erfindungsgemäßen Vorrichtung anhand der Linsenmittel zuerst so groß wie möglich eingestellt. Der zu untersuchende Gegenstand wird mit der erfindungsgemäßen Vorrichtung abgerastert, bis jede Änderung der Ausrichtung der Vorrichtung zu einer Verkleinerung der gemessenen mittleren Oberflächentemperatur führt. Eine Wärmequelle ist auf diese Weise in kurzer Zeit grob lokalisiert. Um die Wärmequelle noch genauer zu lokalisieren, wird der erste Messbereich anhand der Linsenmittel verkleinert. Dann wird die Umgebung der zuerst grob lokalisierten Wärmequelle mit höherer Ortsauflösung abgerastert. Dieser Vorgang wird iterativ wiederholt, bis der Messbereich nicht mehr verkleinert werden können. Schlussendlich ist die Wärmequelle präzise lokalisiert und die mittlere Oberflächentemperatur der Wärmequelle kann vom Bildschirm abgelesen werden.

Als weiterer Vorteil der erfindungsgemäßen Vorrichtung kommt hinzu, dass der Benutzer während der Messung seinen Blick nicht ständig zwischen der erfindungsgemäßen Vorrichtung und dem ersten Messbereich hin- und herwechseln muss, weil er den Bildschirm sowohl zum Anvisieren des ersten Messbereichs als auch zum Ablesen der mittleren Oberflächentemperatur verwendet. Er kann sich voll auf ein exaktes Ausrichten der Vorrichtung und Ablesen der Messdaten konzentrieren.

In der erfindungsgemäßen Vorrichtung sind die Linsenmittel zusätzlich zum Ändern der Größe des Bildbereichs geeignet. Dieses Merkmal ist mit dem Vorteil verbunden, dass der Benutzer sich sowohl einen groben Überblick über eine zu untersuchende Oberfläche verschaffen kann als auch Details der zu untersuchenden Oberfläche genauer inspizieren kann.

In der erfindungsgemäßen Vorrichtung weisen die Linsenmittel ein erstes verstellbares Linsensystem zum Ändern der Größe des ersten Messbereichs und ein zweites verstellbares Linsensystem zum Ändern der Größe des Bildbereichs auf. Der Prozessor ist weiterhin zum Bestimmen des Orts des ersten Messbereichs in dem bearbeiteten Bild basierend auf einer Einstellung des ersten verstellbaren Linsensystems und einer Einstellung des zweiten verstellbaren Linsensystems ausgestaltet. Die verstellbaren Linsensysteme bringen den Vorteil mit sich, dass sie es erlauben, die Größe des ersten Messbereichs und des Bildbereichs schnell, zuverlässig und berechenbar einzustellen. Beispiele für ein erfindungsgemäßes erstes verstellbares Linsensystem sind unter anderem Linsensysteme, die eine oder mehrere Linsen aufweisen, die für Strahlung im mittleren Infrarotbereich durchlässig sind, und dazu dienen, Infrarotstrahlung aus dem ersten Messbereich auf den ersten Infrarotsensor zu leiten. Beispiele für ein erfindungsgemäßes zweites Linsensystem sind Linsensysteme, die eine oder mehrere Linsen aufweisen, die für Strahlung im sichtbaren Bereich des Strahlungsspektrums durchlässig sind, und dazu ausgestaltet sind, den Bildbereich auf den Bildsensor abzubilden. Zum Bestimmen des Orts des ersten Messbereichs in dem bearbeiteten Bild führt der Prozessor beispielsweise eine Parallaxenfehlerkorrektur durch.

In einer bevorzugten Ausführungsform der Erfindung weist die erfindungsgemäße Vorrichtung mindestens zwei zweite Infrarotsensoren zum Erfassen zweiter Wärmestrahlungen zweiter Messbereiche und zum Erzeugen zweiter Signale basierend auf den erfassten zweiten Wärmestrahlungen auf. Die Linsenmittel sind weiterhin zum Ändern von Größen der zweiten Messbereiche ausgestaltet. Der Prozessor ist weiterhin zum Bestimmen mittlerer Oberflächentemperaturen der zweiten Messbereiche basierend auf den zweiten Signalen ausgestaltet. Das bearbeitete Bild zeigt weiterhin Orte der zweiten Messbereiche in dem bearbeiteten Bild und die mittleren Oberflächentemperaturen der zweiten Messbereiche an. Beispiele für erfindungsgemäße zweite Infrarotsensoren sind unter anderem Fotodioden, Bolometer oder pyroelektrische Sensoren. Mit dieser Ausführungsform ist der Vorteil verbunden, dass die mindestens zwei zweiten Messbereiche und der erste Messbereich es erlauben, Temperaturgradienten in dem bearbeiteten Bild darzustellen, um Wärmequellen oder Wärmesenken systematisch aufzudecken. Beispielsweise wird auf der Suche nach einer Wärmequelle das kontaktfreie Temperaturmessgerät in Richtung des wärmsten Messbereichs ausgerichtet, bis die mittlere Oberflächentemperatur der Messbereiche nicht mehr erhöht werden kann. Um den Ort der Wärmequelle noch genauer zu bestimmen, kann der Benutzer den ersten Messbereich, die zweiten Messbereiche und gegebenenfalls den Bildbereich mit Hilfe der Linsenmittel verkleinern.

In einer weiteren bevorzugten Ausführungsform der Erfindung ist das zweite verstellbare Linsensystem weiterhin zum Ändern der Größen der zweiten Messbereiche ausgestaltet. Der Prozessor ist weiterhin zum Bestimmen der Orte der zweiten Messbereiche in dem bearbeiteten Bild basierend auf der Einstellung des ersten verstellbaren Linsensystems und der Einstellung des zweiten verstellbaren Linsensystems ausgestaltet. Diese Ausführungsform weist den Vorteil auf, dass das zweite verstellbare Linsensystem sowohl zum Ändern der Größe des ersten Messbereichs als auch der zweiten Messbereiche verwendet wird.

In einer weiteren bevorzugten Ausführungsform der Erfindung weisen die Linsenmittel weiterhin ein drittes verstellbares Linsensystem zum Ändern der Größen der zweiten Messbereiche auf. Der Prozessor ist weiterhin zum Bestimmen der Orte der zweiten Messbereiche in dem bearbeiteten Bild basierend auf der Einstellung des ersten verstellbaren Linsensystems und einer Einstellung des dritten verstellbaren Linsensystems ausgestaltet. Beispiele für ein erfindungsgemäßes drittes verstellbares Linsensystem sind unter anderem Linsesysteme, die eine oder mehrere Linsen aufweisen, die für Strahlung im mittleren Infrarotbereich durchlässig sind, und dazu dienen Infrarotstrahlung aus dem Messbereich auf die zweiten Infrarotsensor zu leiten. Diese Ausführungsform weist den Vorteil auf, dass die Größen der zweiten Messbereiche unabhängig von der Größe des ersten Messbereichs geändert werden können.

In einer weiteren bevorzugten Ausführungsform der Erfindung zeigt das bearbeitete Bild jeden zweiten Messbereich durch eine zweite Fläche an. Jede zweite Fläche zeigt den Ort des ihr zugeordneten zweiten Messbereichs in dem bearbeiteten Bild an. Außerdem zeigt jede zweite Fläche die mittlere Oberflächentemperatur des ihr zugeordneten zweiten Messbereichs in dem bearbeiteten Bild durch eine Farbe und/oder eine zweite Zahl an. Diese Ausführungsform weist den Vorteil auf, dass die Orte und die mittleren Oberflächentemperaturen der zweiten Messbereiche leicht erkennbar auf dem Bildschirm dargestellt werden.

In einer weiteren bevorzugten Ausführungsform der Erfindung zeigt das bearbeitete Bild den ersten Messbereich durch eine erste Fläche an. Die erste Fläche zeigt den Ort des ersten Messbereichs in dem bearbeiteten Bild an. Eine Farbe der ersten Fläche und/oder eine erste Zahl zeigt die mittlere Oberflächentemperatur des ersten Messbereichs in dem bearbeiteten Bild an. Diese Ausführungsform ist mit dem Vorteil verbunden, dass der Ort und die mittlere Oberflächentemperatur des ersten Messbereichs leicht erkennbar auf dem Bildschirm dargestellt werden.

In einer weiteren bevorzugten Ausführungsform der Erfindung zeigt das bearbeitete Bild von dem Kamerabild nur den ersten Messbereich und blendet einen restlichen Bereich aus, wobei der restliche Bereich komplementär zu dem ersten Messbereich ist, das heißt der restliche Bereich und der komplementäre Bereich ergeben das Kamerabild. In einer weiteren Ausführungsform der Erfindung wird in dem bearbeiteten Bild der erste Messbereich von dem restlichen Bereich hervorgehoben. Beispielsweise werden der erste Messbereich in Farbe und der restliche Bereich oder ein Teil des restlichen Bereichs in Graustufen dargestellt. Als weitere Alternative wird der restliche Bereich im Vergleich zum ersten Messbereich abgedunkelt. Mit diesen Ausführungsformen ist der Vorteil verbunden, dass der erste Messbereich leicht erkennbar auf dem Bildschirm dargestellt wird und der Benutzer nicht durch die Darstellung der Umgebung des Messbereichs abgelenkt wird.

In einer weiteren bevorzugten Ausführungsform der Erfindung weist die Vorrichtung weiterhin ein Projektionsmodul auf. Das Projektionsmodul erzeugt eine sichtbare Markierung des ersten Messbereichs. Diese Ausführungsform ist mit dem Vorteil verbunden, dass sich der erste Messbereich auch ohne Bildschirm einem Ort zuordnen lässt. Diese Ausführungsform ist insbesondere von Vorteil, falls das kontaktfreie Thermometer sehr schnell auf einen zu untersuchenden Gegenstand ausgerichtet werden soll.

In einer weiteren bevorzugten Ausführungsform der Erfindung weist die Vorrichtung weiterhin ein Projektionsmodul auf. Das Projektionsmodul weist eine Lichtquelle, ein optisches Element und ein viertes verstellbares Linsensystem auf.

Die Lichtquelle kann einen im Wesentlichen kollimierten Lichtstrahl erzeugen. Ein Beispiel für eine erfindungsgemäße Lichtquelle ist eine Kombination aus einer Lichtdiode oder einer Laserdiode mit einer Kollimatorlinse, wobei das erzeugte Licht im sichtbaren Bereich des Strahlungsspektrums liegt.

Das optische Element kann ein Lichtmuster aus dem im Wesentlichen kollimierten Lichtstrahl erzeugen. Unter einem Lichtmuster gemäß der vorliegenden Erfindung werden Lichtstrahlen verstanden, die ein Muster auf eine Oberfläche projizieren. Beispiele für ein erfindungsgemäßes Lichtmuster sind Lichtstrahlen, die ein Vieleck oder ein Kegelschnit wie zum Beispiel ein Kreuz oder einen Kreis, auf eine Oberfläche projizieren. Das erfindungsgemäße optische Element kann ein diffraktives oder ein refraktives optisches Element sein. Das erzeugte Lichtmuster kann beispielsweise wie eine Mantelfläche eines Kegels ausgestaltet ist.

Das vierte verstellbare Linsensystem kann eine Größe des Lichtmusters ändern. Beispiele für ein erfindungsgemäßes viertes verstellbares Linsensystem sind Linsensysteme, die eine oder mehrere Linsen aufweisen, die für Strahlung im sichtbaren Bereich des Strahlungsspektrums durchlässig sind. Die Lichtquelle, das optische Element und das vierte verstellbare Linsensystem sind so angeordnet und das vierte verstellbare Linsensystem ist so einstellbar, dass das Lichtmuster den ersten Messbereich sichtbar markiert.

Der Prozessor ist weiterhin zum Einstellen des vierten verstellbaren Linsensystems abhängig von der Einstellung des ersten verstellbaren Linsensystems ausgestaltet, so dass das Lichtmuster den ersten Messbereich sichtbar markiert. Beispielsweise erzeugt das erfindungsgemäße Lichtmuster einen leuchtenden Umriss um den ersten Messbereich. Diese Ausführungsform ist mit dem Vorteil verbunden, dass sich der erste Messbereich auch ohne Bildschirm einem Ort zuordnen lässt. Diese Ausführungsform ist insbesondere von Vorteil, falls das kontaktfreie Thermometer sehr schnell auf einen zu untersuchenden Gegenstand ausgerichtet werden soll.

In einer weiteren Ausführungsform der Erfindung weist die Vorrichtung ein Gehäuse mit einem Messkopf und einem Griff auf, wobei der Messkopf und der Griff über ein erstes Gelenk verbunden sind. Der Bildschirm und gegebenenfalls Bedienelement können auf dem Griff oder auf dem Messkopf angeordnet sein. Die restlichen Komponenten sind an oder in dem Messkopf angeordnet. Das erste Gelenk erlaubt ein Drehen des Messkopfs in Bezug auf den Griff. Diese Ausführungsform ist mit dem Vorteil verbunden, dass der Benutzer den Messkopf beziehungsweise den ersten Messbereich und gegebenenfalls die zweiten Messbereiche auf Oberflächen ausrichten kann, die schwer zu erreichen sind.

In einer weiteren Ausführungsform ist der Bildschirm über ein zweites Gelenk an dem Griff oder dem Messkopf angeordnet. Das zweite Gelenk erlaubt ein Drehen des Bildschirms in Bezug auf den Griff oder den Messkopf. Diese Ausführungsform ist mit dem Vorteil verbunden, dass der Benutzter den Bildschirm so Drehen kann, dass der Bildschirm unabhängig von der Lage der Vorrichtung in Bezug auf den Benutzer immer gut sichtbar für den Benutzer ist.

In einer weiteren Ausführungsform der Erfindung weist die Vorrichtung eine Messeinheit und eine Bedieneinheit auf, die drahtlos, zum Beispiel mittels Bluetooth oder WLAN, miteinander verbunden sind. Der Bildschirm ist auf der Bedieneinheit angeordnet. Dies Ausführungsform bringt den Vorteil mit sich, dass der Benutzer den Messeinheit in eine beliebige, gegebenenfalls schwer einsehbare Position ausrichten und mit Hilfe der Bedieneinheit die Messung dennoch ohne Problem beobachten und steuern kann.

In einer weiteren Ausführungsform der Erfindung ist die Vorrichtung zum Übermitteln des bearbeiteten Bilds über eine drahtlose Verbindung an ein Handheld-Gerät ausgestaltet, wobei das Handheld-Gerät einen Bildschirm aufweist. Beispiele für derartige Handheld-Geräte sind PDAs, Handys oder IPhones. Die drahtlose Verbindung kann beispielsweise auf Bluetooth oder WLAN basieren. Diese Ausführungsform ist mit dem Vorteil verbunden, dass die Vorrichtung keinen abnehmbaren Bildschirm benötigt, und dass sich das bearbeitet Bild und andere Messdaten, wie zum Beispiel die mittlere Oberflächentemperatur des ersten Messbereichs, leicht exportieren lassen.

Die vorliegende Erfindung bezieht sich weiterhin auf ein Verfahren zum kontaktfreien Messen einer mittleren Oberflächentemperatur eines ersten Messbereichs mit der erfindungsgemäßen Vorrichtung, die einen Prozessor, einen Infrarotsensor, einen Bildsensor, Linsenmittel und einen Bildschirm aufweist. Das Verfahren weist folgende Schritte auf: a) Ändern einer Größe des ersten Messbereichs durch die Linsenmittel, b) Erfassen einer ersten Wärmestrahlung des ersten Messbereichs durch den Infrarotsensor, c) Erzeugen eines ersten Signals basierend auf der ersten Wärmestrahlung durch den Infrarotsensor, d) Erfassen einer sichtbaren Strahlung eines Bildbereichs durch den Bildsensor, wobei der Bildbereich den ersten Messbereich zumindest teilweise umfasst, e) Erzeugen eines Kamerabilds basierend auf der sichtbaren Strahlung, f) Bestimmen der mittleren Oberflächentemperatur des ersten Messbereichs basierend auf dem ersten Signal durch den Prozessor, g) Erstellen eines bearbeiteten Bilds durch den Prozessor, wobei das bearbeitete Bild zumindest einen Teil des Kamerabilds darstellt, wobei das bearbeitete Bild einen Ort des ersten Messbereichs in dem bearbeiteten Bild anzeigt, und wobei das bearbeitete Bild die mittlere Oberflächentemperatur des ersten Messbereichs anzeigt, und h) Darstellen des bearbeiteten Bilds durch den Bildschirm.

### Zeichnungen

Anhand der Zeichnungen wird die Erfindung nachstehend exemplarisch anhand von Ausführungsbeispielen eingehend erläutert. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen, weiteren Kombinationen zusammenfassen.

Es zeigen:
- Fig. 1: eine perspektivische Darstellung einer ersten bevorzugten Ausführungsform der erfindungsgemäßen Vorrichtung;
- Fig. 2: eine schematische Schnittdarstellung der ersten bevorzugten Ausführungsform der erfindungsgemäßen Vorrichtung;
- Fig. 3: eine Frontansicht des Bildschirms der ersten bevorzugten Ausführungsform der erfindungsgemäßen Vorrichtung;
- Fig. 4: eine Frontansicht des Bildschirms der ersten bevorzugten Ausführungsform der erfindungsgemäßen Vorrichtung bei verkleinertem ersten Messbereich;
- Fig. 5: eine perspektivische Darstellung einer zweiten bevorzugten Ausführungsform der erfindungsgemäßen Vorrichtung mit zugeschalteten vier zweiten Messbereichen;
- Fig. 6: eine Frontansicht des Bildschirms der zweiten bevorzugten Ausführungsform der erfindungsgemäßen Vorrichtung mit zugeschalteten vier zweiten Messbereichen;

### Beschreibung der Ausführungsbeispiele

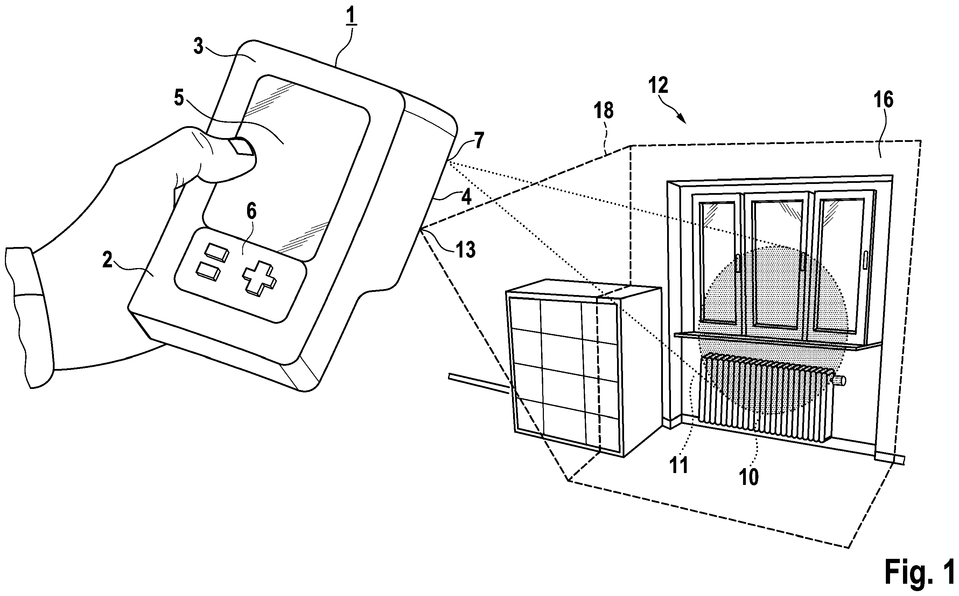

Aus der Darstellung gemäß Fig. 1 ist der Aufbau der ersten bevorzugten Ausführungsform der erfindungsgemäßen Vorrichtung zu erkennen. In dieser Ausführungsform weist die erfindungsgemäße Vorrichtung ein Gehäuse (1) mit einem Griff (2) auf. Mit dem Griff (2) kann die erfindungsgemäße Vorrichtung bequem in einer Hand gehalten werden. Das Gehäuse (1) der erfindungsgemäßen Vorrichtung weist weiterhin eine einem Benutzer zugewandten Seite (3) und eine dem Benutzer abgewandte Seite (4) auf. Auf der zugewandten Seite befindet sich ein Bildschirm (5) und Bedienelemente (6), die der Benutzer beispielsweise mit seinem Daumen bedienen kann. Der Bildschirm (5) ist ein Flüssigkristallbildschirm.

Auf der abgewandten Seite (4) des Gehäuses (1) ist ein erster Infrarotsensor (7) und ein erstes verstellbare Linsensystem (8) angebracht. Der erste Infrarotsensor (7) ist in der ersten bevorzugten Ausführungsform eine Fotodiode, die infrarote Strahlung in ein elektrisches Signal umwandelt. Das erste verstellbare Linsensystem (8) weist in der bevorzugten Ausführungsform zwei Linsen auf, deren Abstand zueinander verstellbar ist, deren Abstände zu dem ersten Infrarotsensor (7) verstellbar sind, und die für Strahlung im mittleren Infrarotbereich durchlässig sind. Der erste Infrarotsensor (7) und das erste verstellbare Linsensystem (8) sind entlang einer ersten Achse (9) angeordnet. Der erste Infrarotsensor (7) erfasst Strahlung aus dem infraroten Strahlungsspektrum ausgehend von einem ersten Messbereich (10). Der erste Messbereich (10) ergibt sich aus der Schnittmenge eines ersten Messvolumens (11) des ersten Infrarotsensors (7) und der zu untersuchenden Oberfläche (12). Das erste Messvolumen (11) des ersten Infrarotsensors (7) weist die Form eines Kegels auf. Die Spitze des Kegels befindet sich am ersten verstellbaren Linsensystem (7) und die Symmetrieachse des Kegels ist entlang der ersten Achse (13) ausgerichtet. Der Öffnungswinkel des Kegels lässt sich über die Einstellung des ersten verstellbaren Linsensystems (8) zu dem ersten Infrarotsensor (7) verändern. Demgemäß kann die Größe des ersten Messbereichs (10) über die Einstellung des ersten verstellbaren Linsensystems (8) verändert werden.

Auf der abgewandten Seite (4) des Gehäuses (1) sind weiterhin ein Bildsensor (13) und ein zweites Linsensystem (14) angebracht. Der Bildsensor (13) ist in dieser ersten bevorzugten Ausführungsform ein CCD-Bildsensor. Das zweite Linsensystem (14) weist in dieser bevorzugten Ausführungsform zwei Linsen auf, deren Abstand zueinander verstellbar ist, deren Abstände zu dem Bildsensor (13) verstellbar sind, und die für Strahlung im mittleren Infrarotbereich durchlässig sind. Der Bildsensor (13) und das zweite verstellbare Linsensystem (14) sind entlang einer zweiten Achse (15) angeordnet. Dabei sind die erste Achse (9) und die zweite Achse (15) versetzt zueinander, im Wesentlichen parallel und im Wesentlichen im rechten Winkel zu der dem Benutzer abgewandten Seite (4) des Gehäuses (1) angeordnet. Das zweite verstellbare Linsensystem (14) erstellt ein Abbild eines Bildbereichs (16) auf den Bildsensor (13). Der Bildsensor (13) erfasst demgemäß ein Kamerabild des Bildbereichs (16). Der Bildbereich (16) ergibt sich aus der Schnittmenge eines Messvolumens (18) des Bildsensors (16) und der zu untersuchenden Oberfläche (12). Das Messvolumen (18) des Bildsensors (13) ist eine Pyramide, wobei die Spitze der Pyramide sich am zweiten verstellbaren Linsensystem (14) befindet und die Symmetrieachse der Pyramide entlang der zweiten Achse (15) ausgerichtet ist. Über eine Einstellung des zweiten verstellbaren Linsensystems (14) lässt sich die Größe des Bildbereichs (16) verändern.

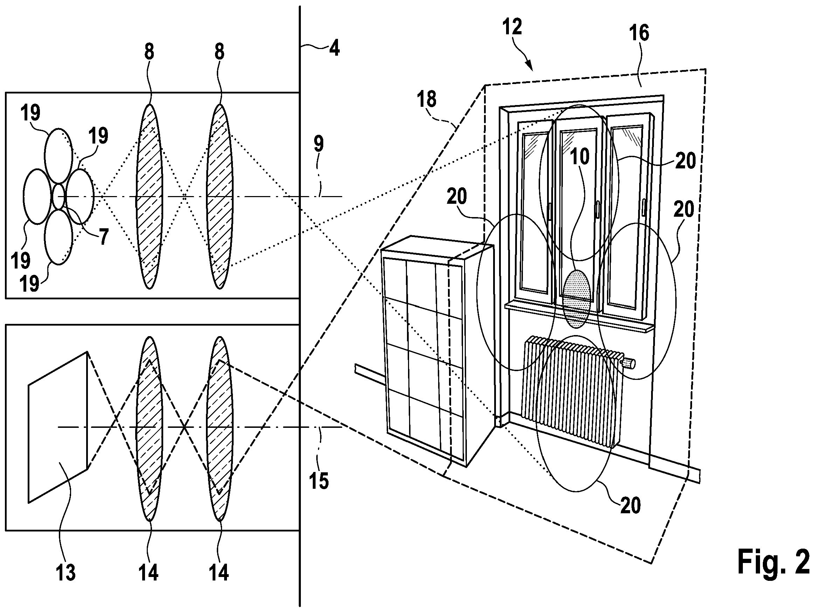

Aus der Darstellung gemäß Fig. 2 ist die relative Anordnung der optischen Komponenten der ersten bevorzugten Ausführungsform der vorliegenden Erfindung zu erkennen: Der erste Infrarotsensor (7) und das erste verstellbare Linsensystem (8) sind entlang der ersten Achse (9) angeordnet. Vier zweite Infrarotsensoren (19) sind rotationssymmetrisch um den ersten Infrarotsensor (7) angeordnet. Die Anordnung des ersten Infrarotsensors (7), der zweiten Infrarotsensoren (19), des ersten verstellbaren Linsensystems (8) und der zu untersuchenden Oberfläche (12) zueinander und die Einstellung des ersten verstellbaren Linsensystems (8) legen den ersten Messbereich (10) und zweite Messbereiche (20) fest. Der erste Infrarotsensor (7) erfasst eine erste Wärmestrahlung des ersten Messbereichs (10) und erzeugt basierend auf der ersten Wärmestrahlung ein erstes Signal. Die vier zweiten Infrarotsensoren (19) erfassen zweite Wärmestrahlungen der zweiten Messbereiche (20) und erzeugen zweite Signale basierend auf den erfassten zweiten Wärmestrahlungen.

Der Bildsensor (13) und das zweite verstellbare Linsensystem (14) sind entlang der zweiten Achse (15) angeordnet. Dabei sind die erste Achse (9) und die zweite Achse (15) im Wesentlichen parallel und versetzt zueinander und im Wesentlichen im rechten Winkel zu der dem Benutzer abgewandten Seite (4) des Gehäuses (1) angeordnet. Die relative Anordnung des Bildsensors (13), des zweiten verstellbaren Linsensystems (14) und der zu untersuchenden Oberfläche (12) legen den Bildbereich (14) fest. Der Bildsensor (13) erfasst ein Kamerabild eines Bildbereichs (16) im sichtbaren Bereich des Strahlungsspektrums.

Das von dem Bildsensor (13) erfasste Kamerabild, das von dem ersten Infrarotsensor (7) erzeugt erste Signal, die Einstellung des ersten verstellbaren Linsensystems (8) und die Einstellung des zweiten verstellbaren Linsensystems (14) werden an einen Prozessor übermittelt. Der Prozessor ist ein Mikroprozessor. Der Prozessor bestimmt aus der relativen Anordnung des Bildsensors (13), des ersten verstellbaren Linsensystems (8), des ersten Infrarotsensors (7) und des zweiten verstellbaren Linsensystems (14), der Einstellung des ersten verstellbaren Linsensystems (8) und der Einstellung des zweiten verstellbaren Linsensystems (14) den Ort des ersten Messbereichs (10) in dem Kamerabild. Weiterhin bestimmt der Prozessor aus dem ersten Signal die mittlere Oberflächentemperatur des ersten Messbereichs (9). Der Prozessor erstellt ein bearbeitetes Bild, das im Wesentlichen das Kamerabild darstellt, wobei das bearbeitete Bild einen Ort des ersten Messbereichs (10) in dem bearbeiteten Bild und die mittlere Oberflächentemperatur des ersten Messbereichs (10) anzeigt. Der Prozessor übermittelt das bearbeitete Bild an den Bildschirm (5). Der Bildschirm (5) zeigt das bearbeitete Bild an.

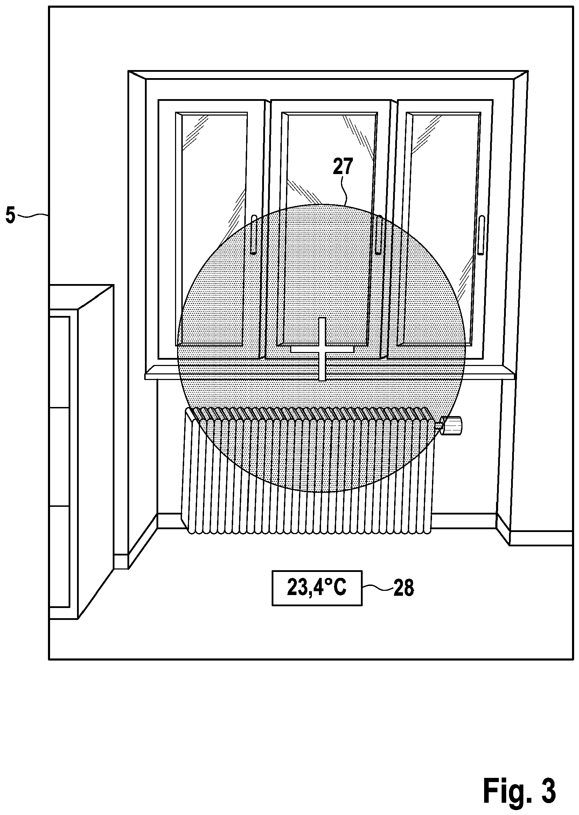

Fig. 3 zeigt beispielhaft die Darstellung des bearbeiteten Bilds auf dem Bildschirm (5) der ersten bevorzugten Ausführungsform. Das bearbeitete Bild zeigt im Wesentlichen das übermittelte Kamerabild. Weiterhin weist das bearbeitete Bild eine erste Fläche (27) und eine erste Zahl (28) auf. Die erste Fläche (27) zeigt den Ort des ersten Messbereichs (10) in dem übermittelten Kamerabild an. Die Farbe der ersten Fläche (27) ist abhängig von der mittleren Oberflächentemperatur des ersten Messbereichs (10). In diesem Ausführungsbeispiel wird die Temperatur 23,4 °C durch eine rote Farbe der ersten Fläche (27) angezeigt. Weiterhin wird die Temperatur durch eine erste Zahl (28) mit einer Nachkommastelle in Grad Celsius angezeigt.

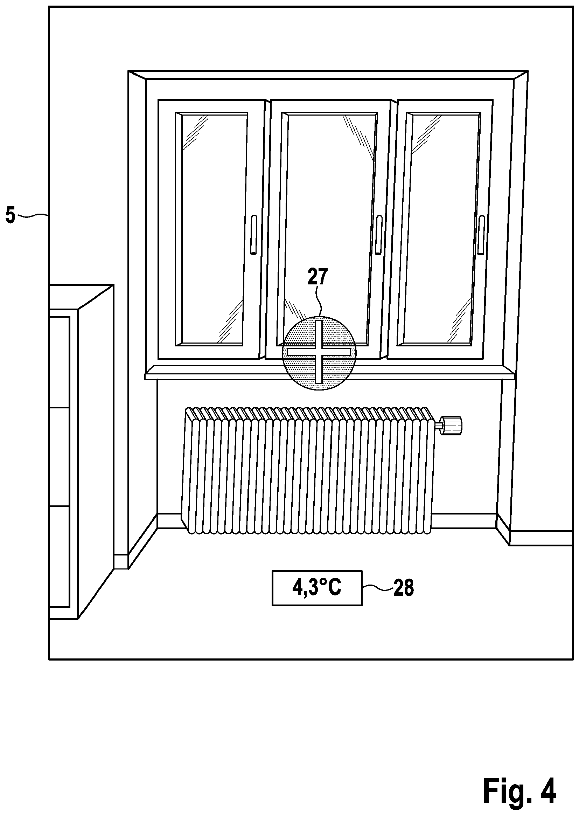

Fig. 4 zeigt genauso wie Fig. 3 die Darstellung des bearbeiteten Bilds auf dem Bildschirm (5) der ersten bevorzugten Ausführungform. Der erste Messbereich (10) lässt sich durch das erste verstellbare Linsensystem (8) vergrößern und verkleinern. In dem durch die Fig. 4 dargestellten Szenario ist der erste Messbereich (10) im Vergleich zu dem durch Fig. 4 dargestellten Szenario verkleinert. Aus diesem Grund ist der Radius der ersten Fläche (27), die den Ort des ersten Messbereichs (10) anzeigt, verkleinert. Die mittlere Oberflächentemperatur des ersten Messbereichs (10) beträgt in diesem Szenario nur noch 4,3 °C und wird durch eine blaue Farbe der ersten Fläche (27) und eine erste Zahl (28) auf dem bearbeiteten Bild angezeigt.

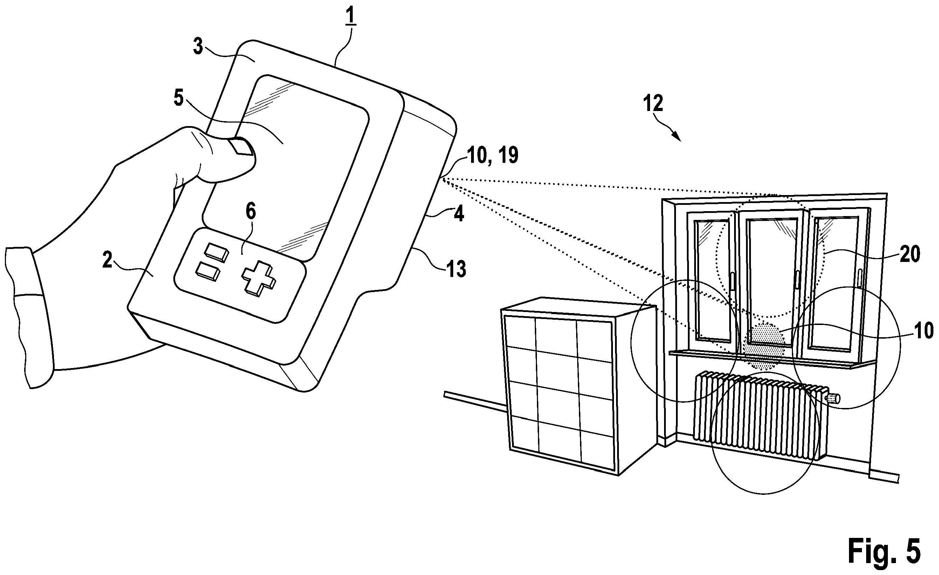

In einer zweiten bevorzugten Ausführungsform lassen sich zu dem ersten Infrarotsensor (7) und dem ersten Messbereich (10) vier zweite Infrarotsensoren (19) und vier zweite Messbereiche (20) hinzuschalten. Die vier zweiten Infrarotsensoren (19) sind rotationssymmetrisch um den ersten Infrarotsensor (7) angeordnet. Fig. 5 stellt die zweite bevorzugt Ausführungsform der erfindungsgemäßen Vorrichtung perspektivisch dar.

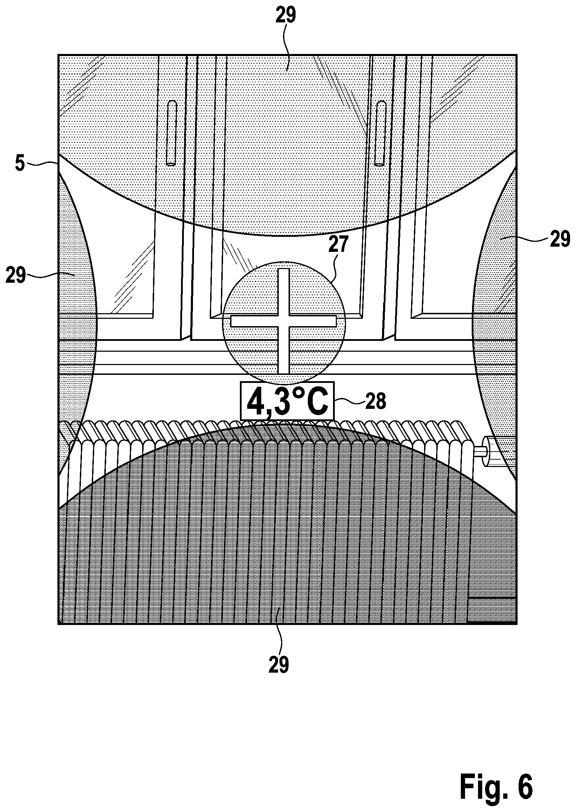

Fig. 6 zeigt das bearbeitete Bild auf dem Bildschirm (5) der zweiten bevorzugten Ausführungsform, wobei in dem bearbeiteten Bild die vier zweiten Messbereiche (20) durch vier zweite Flächen dargestellt werden. Die vier zweiten Flächen (29) zeigen die Positionen und die Größen der zweiten Messbereiche (20) an. Die Farben der vier zweiten Flächen (29) zeigen die mittleren Oberflächentemperaturen der zweiten Messbereiche (20) an.

In einer dritten bevorzugten Ausführungsform der vorliegenden Erfindung weist die Vorrichtung gegenüber den zuvor beschriebenen bevorzugten Ausführungsformen zusätzlich ein Projektionsmodul auf. Das Projektionsmodul weist eine Lichtquelle, ein optisches Element und ein viertes verstellbares Linsensystem auf.

Die Lichtquelle kann einen im Wesentlichen kollimierten Lichtstrahl erzeugen und besteht in der zweiten Ausführungsform aus einer Kombination aus einer Laserdiode mit einer Kollimatorlinse. Die Laserdiode erzeugt kohärente Lichtstrahlen im sichtbaren Bereich des Strahlungsspektrums.

Das optische Element ist ein diffraktives optisches Element zum Erzeugen eines Lichtmusters, das wie eine Mantelfläche eines Kegels ausgestaltet ist. Eine Spitze des Kegels ist an dem diffraktiven optischen Element angeordnet. Laserstrahlen des Lichtmusters verlaufen von der Spitze des Kegels entlang der Mantelfläche des Kegels. Trifft das Lichtmuster auf eine Oberfläche, die orthogonal zu der Symmetrieachse des Kegels ist, erzeugt das Lichtmuster einen leuchtenden Kreis auf der Oberfläche.

Das vierte verstellbare Linsensystem kann eine Größe des Lichtmusters, das heißt den Öffnungswinkel des Kegels, ändern und weist zwei Linsen auf, die für Strahlung im sichtbaren Bereich des Strahlungsspektrums durchlässig sind.

Die Lichtquelle, das optische Element und das vierte verstellbare Linsensystem sind so angeordnet und das vierte verstellbare Linsensystem ist so einstellbar, dass das Lichtmuster den ersten Messbereich sichtbar markiert.

Der Prozessor ist weiterhin zum Einstellen des vierten verstellbaren Linsensystems abhängig von der Einstellung des ersten verstellbaren Linsensystems ausgestaltet, so dass das Lichtmuster den ersten Messbereich sichtbar markiert. Das Lichtmuster ist, wie oben beschrieben, wie eine Mantelfläche eines Kegels ausgestaltet und erzeugt einen leuchtenden Umriss um den ersten Messbereich.

## Patentansprüche

1. Vorrichtung zum kontaktfreien Messen einer mittleren Oberflächentemperatur eines ersten Messbereichs (10), aufweisend:
a) einen ersten Infrarotsensor (7), in Form einer Fotodiode, eines Bolometers oder eines pyroelektrischen Sensors zum Erfassen einer ersten Wärmestrahlung des ersten Messbereichs (10) und
zum Erzeugen eines ersten Signals basierend auf der ersten Wärmestrahlung,
b) einen Bildsensor (13) zum Erfassen einer sichtbaren Strahlung eines Bildbereichs (16) und zum Erzeugen eines Kamerabilds basierend auf der sichtbaren Strahlung, wobei der Bildbereich (16) den ersten Messbereich (10) zumindest teilweise umfasst,
c) einen Prozessor zum Bestimmen der mittleren Oberflächentemperatur des ersten Messbereichs (10) basierend auf dem ersten Signal und zum Erstellen eines bearbeiteten Bilds, wobei das bearbeitete Bild zumindest einen Teil des Kamerabilds darstellt, wobei das bearbeitete Bild einen Ort des ersten Messbereichs (10) in dem bearbeiteten Bild anzeigt, und wobei das bearbeitete Bild die mittlere Oberflächentemperatur des ersten Messbereichs anzeigt,
d) einen Bildschirm (5) zum Darstellen des bearbeiteten Bilds,
e) Linsenmittel, die ein zweites verstellbares Linsensystem (14) aufweisen zum Ändern der Größe des Bildbereichs (16), wobei das zweite verstellbare Linsensystem (14) entlang einer zweiten Achse (15) angeordnet ist,
**dadurch gekennzeichnet,**
**dass** die Vorrichtung weiterhin aufweist:
f) Linsenmittel, die ein erstes verstellbares Linsensystem (8) zum Ändern der Größe des ersten Messbereichs (10) aufweisen, wobei das erste verstellbare Linsensystem (8) entlang einer ersten Achse (9) angeordnet ist und wobei die erste Achse (9) und die zweite Achse (15) versetzt zueinander und im Wesentlichen parallel angeordnet sind, und wobei der Prozessor weiterhin zum Bestimmen des Orts des ersten Messbereichs (10) in dem bearbeiteten Bild basierend auf einer Einstellung des ersten verstellbaren Linsensystems (8) und einer Einstellung des zweiten verstellbaren Linsensystems (14) ausgestaltet ist.

2. Vorrichtung nach Anspruch 1,
wobei die Vorrichtung mindestens zwei zweite Infrarotsensoren (19) zum Erfassen zweiter Wärmestrahlungen zweiter Messbereiche (20) und zum Erzeugen zweiter Signale basierend auf den erfassten zweiten Wärmestrahlungen aufweist,
wobei die Linsenmittel weiterhin zum Ändern von Größen der zweiten Messbereiche ausgestaltet sind,
wobei der Prozessor weiterhin zum Bestimmen mittlerer Oberflächentemperaturen der zweiten Messbereiche (20) basierend auf den zweiten Signalen ausgestaltet ist,
wobei das bearbeitete Bild weiterhin Orte der zweiten Messbereiche (20) in dem bearbeiteten Bild anzeigt, und
wobei das bearbeitete Bild weiterhin die mittleren Oberflächentemperaturen der zweiten Messbereiche (20) anzeigt.

3. Vorrichtung nach Anspruch 2,
wobei das zweite verstellbare Linsensystem (14) weiterhin zum Ändern der Größen der zweiten Messbereiche (20) ausgestaltet ist,
wobei der Prozessor weiterhin zum Bestimmen der Orte der zweiten Messbereiche (20) in dem bearbeiteten Bild basierend auf der Einstellung des ersten verstellbaren Linsensystems (8) und der Einstellung des zweiten verstellbaren Linsensystems (14) ausgestaltet ist.

4. Vorrichtung nach Anspruch 2,
wobei die Linsenmittel weiterhin ein drittes verstellbares Linsensystem zum Ändern der Größen der zweiten Messbereiche (20) aufweisen,
wobei der Prozessor weiterhin zum Bestimmen der Orte der zweiten Messbereiche (20) in dem bearbeiteten Bild basierend auf der Einstellung des ersten verstellbaren Linsensystems (8) und einer Einstellung des dritten verstellbaren Linsensystems ausgestaltet ist.

5. Vorrichtung nach einem der Ansprüche 2 bis 4,
wobei das bearbeitete Bild jeden zweiten Messbereich durch eine zweite Fläche (29) anzeigt,
wobei jede zweite Fläche (29) den Ort des ihr zugeordneten zweiten Messbereichs (20) in dem bearbeiteten Bild anzeigt, und
wobei jede zweite Fläche (29) die mittlere Oberflächentemperatur des ihr zugeordneten zweiten Messbereichs (20) in dem bearbeiteten Bild durch eine Farbe und/oder eine zweite Zahl anzeigt.

6. Vorrichtung nach einem der vorangegangenen Ansprüche,
wobei das bearbeitete Bild den ersten Messbereich (10) durch eine erste Fläche (27) anzeigt,
wobei die erste Fläche (27) den Ort des ersten Messbereichs (10) in dem bearbeiteten Bild anzeigt, und
wobei eine Farbe der ersten Fläche (27) und/oder eine erste Zahl (28) die mittlere Oberflächentemperatur des ersten Messbereichs (10) in dem bearbeiteten Bild anzeigt.

7. Vorrichtung nach einem der vorangegangenen Ansprüche,
wobei die Vorrichtung weiterhin ein Projektionsmodul aufweist,
wobei das Projektionsmodul eine sichtbare Markierung des ersten Messbereichs (10) erzeugt.

8. Vorrichtung nach einem der Ansprüche 1 - 7
wobei die Vorrichtung weiterhin ein Projektionsmodul aufweist,
wobei das Projektionsmodul eine Lichtquelle zum Erzeugen eines im Wesentlichen kollimierten Lichtstrahls, ein optisches Element zum Erzeugen eines Lichtmusters aus dem im Wesentlichen kollimierten Lichtstrahl und ein viertes verstellbares Linsensystem zum Ändern einer Größe des Lichtmusters aufweist,
wobei der Prozessor weiterhin zum Einstellen des vierten verstellbaren Linsensystems abhängig von der Einstellung des ersten verstellbaren Linsensystems (8) ausgestaltet ist, so dass das Lichtmuster den ersten Messbereich (10) sichtbar markiert.

9. Verfahren zum kontaktfreien Messen einer mittleren Oberflächentemperatur eines ersten Messbereichs (10) mit einer Vorrichtung nach einem der vorangegangenen Ansprüche, wobei das Verfahren folgende Schritte aufweist:
a) Ändern einer Größe des ersten Messbereichs (10) durch die Linsenmittel,
b) Erfassen einer ersten Wärmestrahlung des ersten Messbereichs (10) durch den ersten Infrarotsensor (7),
c) Erzeugen eines ersten Signals basierend auf der ersten Wärmestrahlung durch den ersten Infrarotsensor (7),
d) Erfassen einer sichtbaren Strahlung eines Bildbereichs (16) durch den Bildsensor (13), wobei der Bildbereich (16) den ersten Messbereich (10) zumindest teilweise umfasst,
e) Erzeugen eines Kamerabilds basierend auf der sichtbaren Strahlung,
f) Bestimmen der mittleren Oberflächentemperatur des ersten Messbereichs (10) basierend auf dem ersten Signal durch den Prozessor,
g) Erstellen eines bearbeiteten Bilds durch den Prozessor, wobei das bearbeitete Bild zumindest einen Teil des Kamerabilds darstellt, wobei das bearbeitete Bild einen Ort des ersten Messbereichs (10) in dem bearbeiteten Bild anzeigt, und wobei das bearbeitete Bild die mittlere Oberflächentemperatur des ersten Messbereichs (10) anzeigt, und
h) Darstellen des bearbeiteten Bilds durch den Bildschirm (5).

## Claims

1. Apparatus for contactless measurement of a mean surface temperature of a first measurement region (10), having:
a) a first infrared sensor (7) in the form of a photodiode, a bolometer or a pyroelectric sensor for capturing a first thermal radiation of the first measurement region (10) and for producing a first signal based on the first thermal radiation,
b) an image sensor (13) for capturing visible radiation of an image region (16) and for producing a camera image based on the visible radiation, wherein the image region (16) at least partially comprises the first measurement region (10),
c) a processor for determining the mean surface temperature of the first measurement region (10) based on the first signal and for creating a processed image, wherein the processed image represents at least a portion of the camera image, wherein the processed image indicates a site of the first measurement region (10) in the processed image, and wherein the processed image indicates the mean surface temperature of the first measurement region,
d) a screen (5) for presenting the processed image,
e) lens means having a second adjustable lens system (14) for changing the size of the image region (16), wherein the second adjustable lens system (14) is arranged-along a second axis (15)
**characterized**
**in that** the apparatus furthermore has:
f) lens means which have an adjustable lens system (8) for changing the size of the first measurement region (10),
wherein the first adjustable lens system (8) is arranged along a first axis (9) and wherein the first axis (9) and the second axis (15) are arranged with an offset and substantially parallel with respect to one another, and wherein the processor is furthermore configured for determining the site of the first measurement region (10) in the processed image based on a setting of the first adjustable lens system (8) and a setting of-the second adjustable lens system (14).

2. Apparatus according to Claim 1,
wherein the apparatus has at least two infrared sensors (19) for capturing second thermal radiation of second measurement regions (20) and for producing second signals based on the captured second thermal radiation,
wherein the lens means are furthermore configured for changing sizes of the second measurement regions, wherein the processor is furthermore configured for determining mean surface temperatures of the second measurement regions (20) based on the second signals, wherein the processed image furthermore indicates sites of the second measurement regions (20) in the processed image, and
wherein the processed image furthermore indicates the mean surface temperatures of the second measurement regions (20).

3. Apparatus according to Claim 2,
wherein the second adjustable lens system (14) is furthermore configured for changing the sizes of the second measurement regions (20),
wherein the processor is furthermore configured for determining the sites of the second measurement regions (20) in the processed image based on the setting of the first adjustable lens system (8) and the setting of the second adjustable lens system (14).

4. Apparatus according to Claim 2,
wherein the lens means furthermore have a third adjustable lens system for changing sizes of the second measurement regions (20),
wherein the processor is furthermore configured for determining the sites of the second measurement regions (20) in the processed image based on the setting of the first adjustable lens system (8) and a setting of the third adjustable lens system.

5. Apparatus according to one of Claims 2 to 4,
wherein the processed image indicates each second measurement region by way of a second surface (29), wherein each second surface (29) indicates the site of the second measurement region (20) assigned thereto in the processed image, and
wherein each second surface (29) indicates the mean surface temperature of the second measurement region (20) assigned thereto in the processed image by way of a colour and/or a second number.

6. Apparatus according to one of the preceding claims,
wherein the processed image indicates the first measurement region (10) by way of a first surface (27), wherein the first surface (27) indicates the site of the first measurement region (10) in the processed image, and
wherein a colour of the first surface (27) and/or a first number (28) indicates the mean surface temperature of the first measurement region (10) in the processed image.

7. Apparatus according to one of the preceding claims,
wherein the apparatus furthermore has a projection module,
wherein the projection module produces a visible marking of the first measurement region (10).

8. Apparatus according to one of Claims 1-7,
wherein the apparatus furthermore has a projection module,
wherein the projection module is a light source for producing a substantially collimated light beam, an optical element for producing a light pattern from the substantially collimated light beam, and a fourth adjustable lens system for changing a size of the light pattern,
wherein the processor is furthermore configured for setting the fourth adjustable lens system in dependence on the setting of the first adjustable lens system (8), such that the light pattern visibly marks the first measurement region (10).

9. Method for contactless measurement of a mean surface temperature of a first measurement region (10) with an apparatus according to one of the preceding claims, wherein the method includes the following steps:
a) changing a size of the first measurement region (10) using the lens means,
b) capturing a first thermal radiation of the first measurement region (10) using the first infrared sensor (7),
c) producing a first signal based on the first thermal radiation using the first infrared sensor (7),
d) capturing a visible radiation of an image region (16) using the image sensor (13), wherein the image region (16) at least partially comprises the first measurement region (10),
e) producing a camera image based on the visible radiation,
f) determining the mean surface temperature of the first measurement region (10) based on the first signal using the processor,
g) creating a processed image using the processor, wherein the processed image presents at least a portion of the camera image, wherein the processed image indicates a site of the first measurement region (10) in the processed image, and wherein the processed image indicates the mean surface temperature of the first measurement region (10), and
h) presenting the processed image using the screen (5).

## Revendications

1. Dispositif de mesure sans contact d'une température superficielle moyenne d'une première zone de mesure (10), comprenant :
a) un premier capteur d'infrarouges (7) sous la forme d'une photodiode, d'un bolomètre ou d'un capteur pyroélectrique destiné à détecter un premier rayonnement thermique de la première zone de mesure (10) et à générer un premier signal basé sur le premier rayonnement thermique,
b) un capteur d'image (13) destiné à détecter un rayonnement visible d'une zone d'image (16) et à générer une image de caméra en se basant sur le rayonnement visible, la zone d'image (16) englobant au moins partiellement la première zone de mesure (10),
c) un processeur destiné à déterminer la température superficielle moyenne de la première zone de mesure (10) en se basant sur le premier signal et à créer une image traitée, l'image traitée représentant au moins une partie de l'image de caméra, l'image traitée indiquant un endroit de la première zone de mesure (10) dans l'image traitée, et l'image traitée indiquant la température superficielle moyenne de la première zone de mesure,
d) un écran (5) destiné à représenter l'image traitée,
e) des moyens à lentilles, qui possèdent un deuxième système de lentilles (14) positionnable destiné à modifier la taille de la zone d'image (16), le deuxième système de lentilles (14) positionnable étant disposé le long d'un deuxième axe (15),
**caractérisé en ce que** le dispositif comprend en outre :
f) des moyens à lentilles, qui possèdent un premier système de lentilles (8) positionnable destiné à modifier la taille de la première zone de mesure (10), le premier système de lentilles (8) positionnable étant disposé le long d'un premier axe (9) et le premier axe (9) et le deuxième axe (15) étant disposés de manière décalée l'un par rapport à l'autre et sensiblement en parallèle, et le processeur étant en outre configuré pour déterminer l'endroit de la première zone de mesure (10) dans l'image traitée en se basant sur un réglage du premier système de lentilles (8) positionnable et un réglage du deuxième système de lentilles (14) positionnable.

2. Dispositif selon la revendication 1,
le dispositif possédant au moins deux deuxièmes capteurs d'infrarouges (19) destinés à détecter des deuxièmes rayonnements thermiques de deuxièmes zones de mesure (20) et à générer des deuxièmes signaux en se basant sur les deuxièmes rayonnements thermiques détectés,
lés moyens à lentilles étant en outre configurés pour modifier les tailles des deuxièmes zones de mesure,
le processeur étant en outre configuré pour déterminer les températures- superficielles moyennes des deuxièmes zones de mesure (20) en se basant sur les deuxièmes signaux,
l'image traitée indiquant en outre les endroits des deuxièmes zones de mesure (20) dans l'image traitée, et l'image traitée indiquant en outre les températures superficielles moyennes des deuxièmes zones de mesure (20) .

3. Dispositif selon la revendication 2,
le deuxième système de lentilles (14) positionnable étant en outre configuré pour modifier les tailles des deuxièmes zones de mesure (20),
le processeur étant en outre configuré pour déterminer les endroits des deuxièmes zones de mesure (20) dans l'image traitée en se basant sur le réglage du premier système de lentilles (8) positionnable et le réglage du deuxième système de lentilles (14) positionnable.

4. Dispositif selon la revendication 2,
les moyens à lentilles possédant en outre un troisième système de lentilles positionnable destiné à modifier les tailles des deuxièmes zones de mesure (20),
le processeur étant en outre configuré pour déterminer les endroits des deuxièmes zones de mesure (20) dans l'image traitée en se basant sur le réglage du premier système de lentilles (8) positionnable et un réglage du troisième système de lentilles positionnable.

5. Dispositif selon l'une des revendications 2 à 4, l'image traitée indiquant chaque deuxième zone de mesure par une deuxième surface (29),
chaque deuxième surface (29) indiquant l'endroit de la deuxième zone de mesure (20) qui lui est associée dans l'image traitée, et chaque deuxième surface (29) indiquant la température superficielle moyenne de la deuxième zone de mesure (20) qui lui est associée dans l'image traitée par une couleur et/ou un deuxième nombre.

6. Dispositif selon l'une des revendications précédentes,
l'image traitée indiquant la première zone de mesure (10) par une première surface (27),
la première surface (27) indiquant l'endroit de la première zone de mesure (10) dans l'image traitée, et une couleur de la première surface (27) et/ou un premier nombre (28) indiquant la température superficielle moyenne de la première zone de mesure (10) dans l'image traitée.

7. Dispositif selon l'une des revendications précédentes,
le dispositif possédant en outre un module de projection, le module de projection générant un marquage visible de la première zone de mesure (10).

8. Dispositif selon l'une des revendications 1 à 7, le dispositif possédant en outre un module de projection, le module de projection possédant une source de lumière destinée à générer un rayon lumineux sensiblement collimaté, un élément optique destiné à générer un motif lumineux à partir du rayon lumineux sensiblement collimaté et un quatrième système de lentilles positionnable destiné à modifier une taille du motif lumineux,
le processeur étant en outre configuré pour régler le quatrième système de lentilles positionnable en fonction du réglage du premier système de lentilles (8) positionnable de telle sorte que le motif lumineux marque la première zone de mesure (10) de manière visible.

9. Procédé de mesure sans contact d'une température superficielle moyenne d'une première zone de mesure (10) avec un .dispositif selon l'une des revendications précédentes, le procédé comprenant les étapes suivantes :
a) modification d'une taille de la première zone de mesure (10) par les moyens à lentilles,
b) détection d'un premier rayonnement thermique de la première zone de mesure (10) par le premier capteur d'infrarouges (7),
c) génération d'un premier signal en se basant sur le premier rayonnement thermique par le premier capteur d'infrarouges (7),
d) détection d'un rayonnement visible d'une zone d'image (16) par le capteur d'image (13), la zone d'image (16) englobant au moins partiellement la première zone de mesure (10),
e) génération d'une image de caméra en se basant sur le rayonnement visible,
f) détermination de la température superficielle moyenne de la première zone de mesure (10) en se basant sur le premier signal par le processeur,
g) création d'une image traitée par le processeur, l'image traitée représentant au moins une partie de l'image de caméra, l'image traitée indiquant un endroit de la première zone de mesure (10) dans l'image traitée et l'image traitée indiquant la température superficielle moyenne de la première zone de mesure (10), et
h) représentation de l'image traitée par l'écran (5).
